# EUROPEAN PATENT SPECIFICATION

(11) **EP 3 173 207 B1**
(45) Date of publication and mention of the grant of the patent: **13.03.2019**
(21) Application number: 16198332.5
(22) Date of filing: 11.11.2016
(51) Int. Cl.: B29C 45/54, B29C 45/58

(54) **INJECTION UNIT WITH DIRECTION CHANGEOVER VALVE**
EINSPRITZEINHEIT MIT RICHTUNGSUMSCHALTVENTIL
UNITÉ D'INJECTION AVEC VALVE DE CHANGEMENT DE RÉGIME

(30) Priority: 25.11.2015 JP 2015229728
(43) Date of publication of application: 31.05.2017
(73) Proprietor: SUMITOMO HEAVY INDUSTRIES, LTD., Tokyo 141-6025 (JP)
(72) Inventor: NOSAKA, Hiromichi, Chiba-shi, Chiba 263-0001 (JP)
(74) Representative: Louis Pöhlau Lohrentz

(56) References cited:
- EP-A1- 0 254 366
- EP-A1- 0 688 986
- GB-A- 270 997
- JP-A- 2004 243 704
- JP-A- 2008 132 627
- US-A- 3 048 192
- US-A1- 2011 011 474

## Description

### BACKGROUND OF THE INVENTION

### Field of the Invention

Certain embodiment of the present invention relates to an injection unit and a direction changeover valve.

Priority is claimed to Japanese Patent Application No. 2015-229728, filed November 25, 2015, the entire content of which is incorporated herein by reference.

### Description of Related Art

Prior art documents EP 254 366 A1 and JP 2008 132627 disclose injection molding machines with distributors comprising a valve body that is shifted linearly.

Patent document JP 2004 243704 discloses an injection molding machine equipped with a plurality of plasticizing devices, a plurality of injection devices, and a plurality of distributors.

A pre-plasticizing injection molding portion disclosed in Japanese Unexamined Patent Application Publication No. 7-117087 includes a three-way valve. The three-way valve is provided at an intersection point between a first communication hole which communicates with a screw tip chamber, a second communication hole which communicates with a plunger tip chamber, and a third communication hole which communicates with a cavity. The three-way valve includes a T-shaped flow path through which a molten resin flows. The three-way valve is rotated by 90°, and the three-way valve is switched to a state where the first communication hole and the second communication hole communicate with each other and the third communication hole is closed, and a state where the second communication hole and the third communication hole communicate with each other and the first communication hole is closed.

In the related art, switching of a flow direction of a molding material takes time, causing a molding cycle time to increase.

### SUMMARY OF THE INVENTION

The present invention is made in consideration of the above-described circumstances, and a main object thereof is to provide an injection unit in which a time required for switching a flow direction of a molding material can be shortened.

In order to achieve the above-described object, according to an aspect of the present invention, there is provided an injection unit, including: a first cylinder; a second cylinder; a nozzle; and a direction changeover valve which switches a flow direction of a molding material between the first cylinder, the second cylinder, and the nozzle, in which the direction changeover valve includes a valve casing and a valve body which is rotatable inside the valve casing, the valve casing includes a first cylinder connection port which communicates with the inside of the first cylinder, a second cylinder connection port which communicates with the inside of the second cylinder, and a nozzle connection port which communicates with the inside of the nozzle, and the valve body includes a first plug portion which blocks the nozzle connection port and communicates the first cylinder connection port and the second cylinder connection port with each other and a second plug portion which blocks the first cylinder connection port and communicates the second cylinder connection port and the nozzle connection port with each other, the first plug portion and the second plug portion have a gap therebetween along an outer periphery of the valve body.

According to the aspect of the present invention, an injection unit in which the time required for switching a flow direction of a molding material can be shortened is provided.

### BRIEF DESCRIPTION OF THE DRAWINGS

Fig. 1 is a view showing an injection unit according to an embodiment, and shows a first state of a valve body of a direction changeover valve.
Fig. 2 is a view showing the injection unit according to the embodiment, and shows a second state of the valve body of the direction changeover valve.
Fig. 3 is a view showing an injection unit according to a first modification example, and shows a first state of a valve body of a direction changeover valve.
Fig. 4 is a view showing the injection unit according to the first modification example, and shows a second state of the valve body of the direction changeover valve.
Fig. 5 is a view showing an injection unit according to a second modification example, and shows a first state of a valve body of a direction changeover valve.
Fig. 6 is a view showing the injection unit according to the second modification example, and shows a second state of the valve body of the direction changeover valve.

### DETAILED DESCRIPTION OF THE INVENTION

Hereinafter, an embodiment of the present invention is described with reference to the drawings. Meanwhile, in each drawing, the same or corresponding reference numerals are assigned to the same or corresponding configurations, and descriptions thereof are omitted.

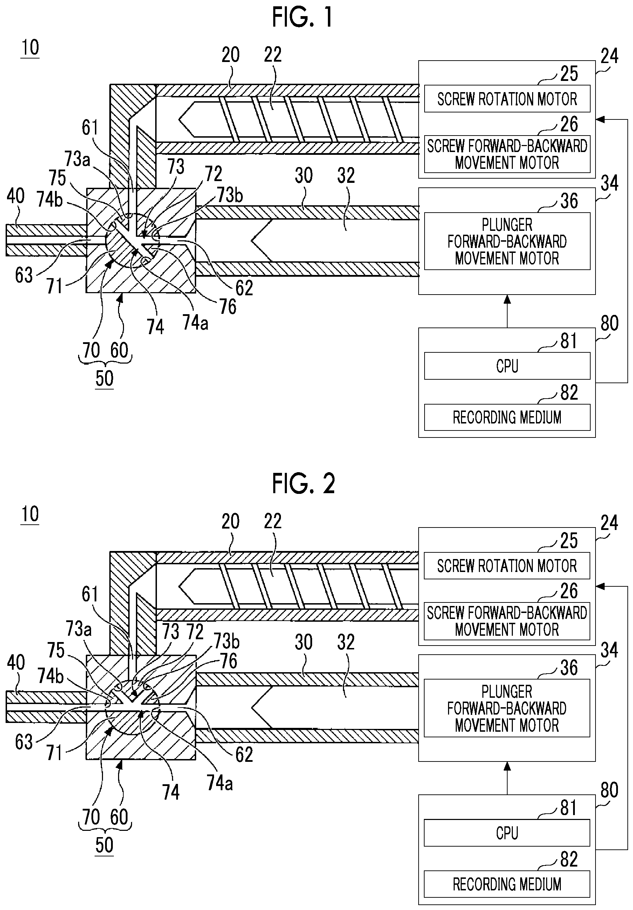

Fig. 1 is a view showing an injection unit according to a first embodiment, and shows a first state of a valve body of a direction changeover valve. Fig. 2 is a view showing the injection unit according to the first embodiment, and shows a second state of the valve body of the direction changeover valve. Figs. 1 and 2 are sectional views perpendicular to a rotation center line of the valve body. As shown in Figs. 1 and 2, an injection unit 10 includes a screw cylinder 20, a screw 22, a screw drive section 24, a plunger cylinder 30, a plunger 32, a plunger drive section 34, a nozzle 40, a direction changeover valve 50, and a controller 80.

A solid molding material is supplied from the outside of the screw cylinder 20 to the inside thereof. The screw cylinder 20 heats and melts the solid molding material. A heating source such as a heater is provided on the outer periphery of the screw cylinder 20. The screw cylinder 20 corresponds to a first cylinder described in claims.

The screw 22 is disposed inside the screw cylinder 20, and moves the molding material inside the screw cylinder 20. The screw 22 may be disposed to freely move forward and backward and to be rotatable inside the screw cylinder 20. In addition, the screw 22 may be disposed so as not to freely move forward and backward and so as to be rotatable inside the screw cylinder 20.

The screw drive section 24 operates the screw 22. For example, the screw drive section 24 includes a screw rotation motor 25 and a screw forward-backward movement motor 26. The screw rotation motor 25 rotates the screw 22. The screw forward-backward movement motor 26 moves the screw 22 forward and backward. A movement conversion mechanism which converts rotation motion of the screw forward-backward movement motor 26 into linear motion of the screw 22 is provided between the screw 22 and the screw forward-backward movement motor 26. For example, the movement conversion mechanism is configured of a ball screw or the like.

A molding material is supplied from the screw cylinder 20 to the inside of the plunger cylinder 30. A heating source such as a heater is provided on the outer periphery of the plunger cylinder 30. The plunger cylinder 30 corresponds to a second cylinder described in claims.

The plunger 32 is disposed inside the plunger cylinder 30, and moves the molding material inside the plunger cylinder 30. The plunger 32 is disposed to freely move forward and backward inside the plunger cylinder 30.

The plunger drive section 34 operates the plunger 32. For example, the plunger drive section 34 includes a plunger forward-backward movement motor 36. The plunger forward-backward movement motor 36 moves the plunger 32 forward and backward. A movement conversion mechanism which converts rotation motion of the plunger forward-backward movement motor 36 into linear motion of the plunger 32 is provided between the plunger 32 and the plunger forward-backward movement motor 36. For example, the movement conversion mechanism is configured of a ball screw or the like.

The nozzle 40 injects a molding material which is supplied from the direction changeover valve 50 to a mold unit. A liquid molding material which fills the inside of the mold unit is solidified, and a molding product is molded.

The direction changeover valve 50 switches a flow direction of the molding material between the screw cylinder 20, the plunger cylinder 30, and the nozzle 40. The direction changeover valve 50 includes a valve casing 60 and a valve body 70.

The valve casing 60 includes a screw cylinder connection port 61, a plunger cylinder connection port 62, and a nozzle connection port 63. The screw cylinder connection port 61 communicates with the inside of the screw cylinder 20. The screw cylinder connection port 61 corresponds to a first cylinder connection port described in claims. The plunger cylinder connection port 62 communicates with the inside of the plunger cylinder 30. The plunger cylinder connection port 62 corresponds to a second cylinder connection port described in claims. The nozzle connection port 63 communicates with the inside of the nozzle 40.

For example, the plunger cylinder connection port 62 and the nozzle connection port 63 are provided on sides opposite to each other in a state where the rotation center line of the valve body 70 is interposed therebetween. Meanwhile, for example, the screw cylinder connection port 61 is provided at a position of approximately the same distance along the outer periphery of the valve body 70 from both the plunger cylinder connection port 62 and the nozzle connection port 63. That is, the plunger cylinder connection port 62, the screw cylinder connection port 61, and the nozzle connection port 63 are disposed at a pitch of 90° in this order in a predetermined direction (counterclockwise direction in Figs. 1 and 2) with the rotation center line of the valve body 70 as a center.

The valve body 70 rotates inside the valve casing 60, and is switched to a first state (refer to Fig. 1) and a second state (refer to Fig. 2). When the valve body 70 is in the first state, the screw cylinder connection port 61 and the plunger cylinder connection port 62 communicate with each other, and the nozzle connection port 63 is blocked. Meanwhile, the valve body 70 is in the second state, the plunger cylinder connection port 62 and the nozzle connection port 63 communicate with each other, and the screw cylinder connection port 61 is blocked.

In addition, the state of the valve body 70 is not limited to the first state shown in Fig. 1 and the second state shown in Fig. 2. For example, the valve body 70 may be in a state where the screw cylinder connection port 61, the plunger cylinder connection port 62, and the nozzle connection port 63 are simultaneously blocked. In addition, the valve body 70 may be in a state where the screw cylinder connection port 61 and the nozzle connection port 63 communicate with each other and the plunger cylinder connection port 62 is blocked.

The controller 80 includes a Center Processing Unit (CPU) 81 and a recording medium 82 such as a memory. The controller 80 executes a program stored in the recording medium 82 by the CPU 81, and controls the screw drive section 24, the plunger drive section 34, the direction changeover valve 50, or the like.

For example, in a plasticizing process, the controller 80 drives the screw rotation motor 25, rotates the screw 22 at a setting rotating speed, and feeds a molding material forward along spiral grooves of the screw 22. Accordingly, the molding material is gradually melted. A liquid molding material is fed to the front of the screw 22 and is accumulated in front of the screw cylinder 20, and the screw 22 is moved backward.

In the plasticizing process, in order to prevent a sudden backward movement of the screw 22, the controller 80 may drive the screw forward-backward movement motor 26 to apply a setting backpressure to the screw 22. If the screw 22 moves backward to a predetermined position and a molding material having a predetermined amount is accumulated in front of the screw 22, the controller 80 stops the drive of the screw rotation motor 25.

In the plasticizing process, after the molding material having a predetermined amount is accumulated in front of the screw 22, the controller 80 drives the screw forward-backward movement motor 26 to move the screw 22 forward. Accordingly, the molding material flows from the screw cylinder 20 into the plunger cylinder 30 via the valve body 70 in the first state. As a result, the molding material is accumulated in front of the plunger 32, and the plunger 32 is moved backward.

In the plasticizing process, in order to prevent a sudden backward movement of the plunger 32, the controller 80 may drive the plunger forward-backward movement motor 36 to apply a setting backpressure to the plunger 32. If the plunger 32 moves backward to a predetermined position and a molding material having a predetermined amount is accumulated in front of the plunger 32, the controller 80 stops the drive of the screw forward-backward movement motor 26 and stops the drive of the plunger forward-backward movement motor 36.

In addition, the plasticizing process, the controller 80 of the present embodiment may move the screw 22 forward and backward but may not move the screw 22 forward and backward. The screw 22 does not move forward and backward and the screw 22 rotates. Accordingly, the molding material is fed forward along the spiral grooves of the screw 22, and the molding material flows from the screw cylinder 20 into the plunger cylinder 30.

After the molding material having a predetermined is accumulated in front of the plunger 32, the controller 80 controls a filling process. The controller 80 rotates the valve body 70 of the direction changeover valve 50 between the plasticizing process and the filling process, and switches the state of the valve body 70 from the first state shown in Fig. 1 to the second state shown in Fig. 2.

In the filling process, the controller 80 drives the plunger forward-backward movement motor 36 and moves the plunger 32 forward. Accordingly, the molding material flows from the plunger cylinder 30 into the nozzle 40 via the valve body 70 in the second state, and the inside of the mold unit is filled with the liquid molding material from the nozzle 40. The filled molding material is solidified, and the molding product is molded.

After the filling process is completed, before the controller 80 supplies the molding material from the screw cylinder 20 to the plunger cylinder 30 in the next plasticizing process, the controller 80 rotates the valve body 70 of the direction changeover valve 50 and returns the state of the valve body 70 from the second state shown in Fig. 2 to the first state shown in Fig. 1. The rotation direction of the valve body 70 when the state of the valve body 70 is switched from the second state shown in Fig. 2 to the first state shown in Fig. 1 is opposite to the rotation direction of the valve body 70 when the state of the valve body 70 is switched from the first state shown in Fig. 1 to the second state shown in Fig. 2.

The controller 80 repeatedly performs the plasticizing processes, the filling processes, or the like, and repeatedly manufactures the molding products.

As shown in Figs. 1 and 2, the valve body 70 of the present embodiment includes a first plug portion 71 and a second plug portion 72 with a gap therebetween along the outer periphery of the valve body 70. The first plug portion 71 blocks the nozzle connection port 63 when the state of the valve body 70 becomes the first state shown in Fig. 1. Meanwhile, the second plug portion 72 blocks the screw cylinder connection port 61 when the state of the valve body 70 becomes the second state shown in Fig. 2. The first plug portion 71 and the second plug portion 72 are connected to each other and integrally rotate with each other.

The valve body 70 includes a flow path through which the molding material flows between the first plug portion 71 and the second plug portion 72. For example, the valve body 70 includes a first flow path 73 and a second flow path 74 between the first plug portion 71 and the second plug portion 72.

The first flow path 73 is used in the plasticizing process and communicates with the screw cylinder connection port 61 and the plunger cylinder connection port 62. For example, as shown in Figs. 1 and 2, the first flow path 73 is formed in a polygonal line shape in a sectional view.

Meanwhile, the second flow path 74 is used in the filling process and communicates with the plunger cylinder connection port 62 and the nozzle connection port 63. For example, as shown in Figs. 1 and 2, the second flow path 74 is formed in linear shape in a sectional view.

The first flow path 73 and the second flow path 74 intersect each other midway in Figs. 1 and 2, and are formed in an approximately K shape in a sectional view. In addition, the first flow path 73 and the second flow path 74 may not intersect each other midway.

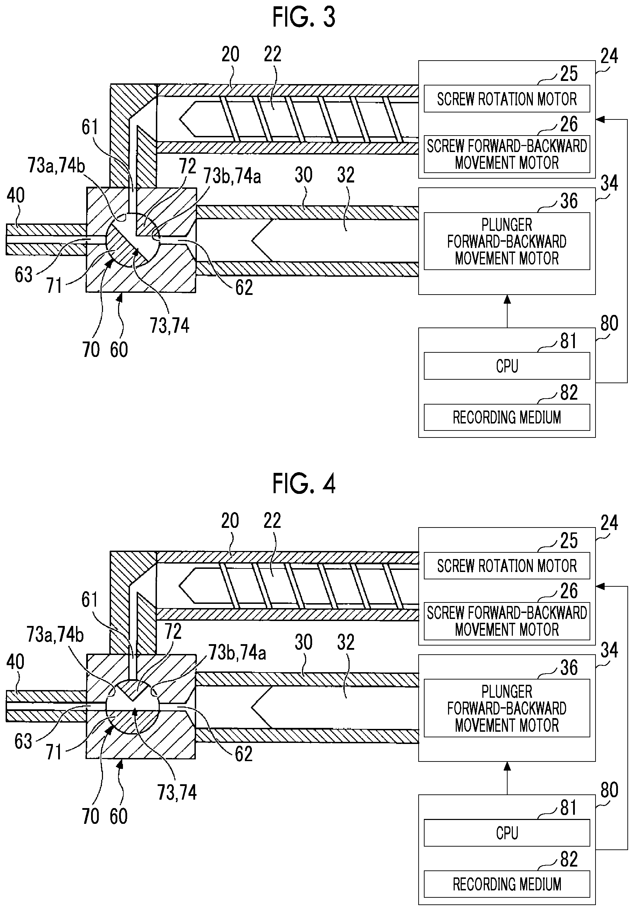

An inlet 73a of the first flow path 73 and an outlet 74b of the second flow path 74 are provided on one side of the first plug portion 71. In the present embodiment, the inlet 73a of the first flow path 73 and the outlet 74b of the second flow path 74 are partitioned by a first partition portion 75. However, as shown in Figs. 3 and 4, the inlet 73a and the outlet 74b may not be partitioned and may be collectively formed in one portion.

Meanwhile, an outlet 73b of the first flow path 73 and an inlet 74a of the second flow path 74 are provided on the side opposite to the first plug portion 71. In the present embodiment, the outlet 73b of the first flow path 73 and the inlet 74a of the second flow path 74 are partitioned by a second partition portion 76. However, as shown in Figs. 3 and 4, the outlet 73b and the inlet 74a may not be partitioned and may be collectively formed in one portion.

As described above, in the present embodiment, the first plug portion 71 and the second plug portion 72 are provided with a gap therebetween along the outer periphery of the valve body 70. Meanwhile, in Patent Document 1, the plug portion which blocks the nozzle connection port 63 when the state of the valve body 70 becomes the first state is the same as the plug portion which blocks the screw cylinder connection port 61 when the state of the valve body 70 becomes the second state. According to the present embodiment, since the first plug portion 71 and the second plug portion 72 are separately provided along the outer periphery of the valve body 70, the rotation angle of the valve body 70 required for switching the state to the first state and the second state can be decreased than that of the related art. Specifically, the rotation angle of the valve body 70 required for switching the state to the first state and the second state can be decreased from 90° of the related art to 45° by half. Accordingly, time required for switching the flow direction of the molding material can be shortened, and molding cycle time can be shortened. In addition, in a case where a cylinder is used as a drive source which rotates the valve body 70, the length of the cylinder can be decreased, and a volume of a tank which stores an operating liquid of the cylinder can be decreased.

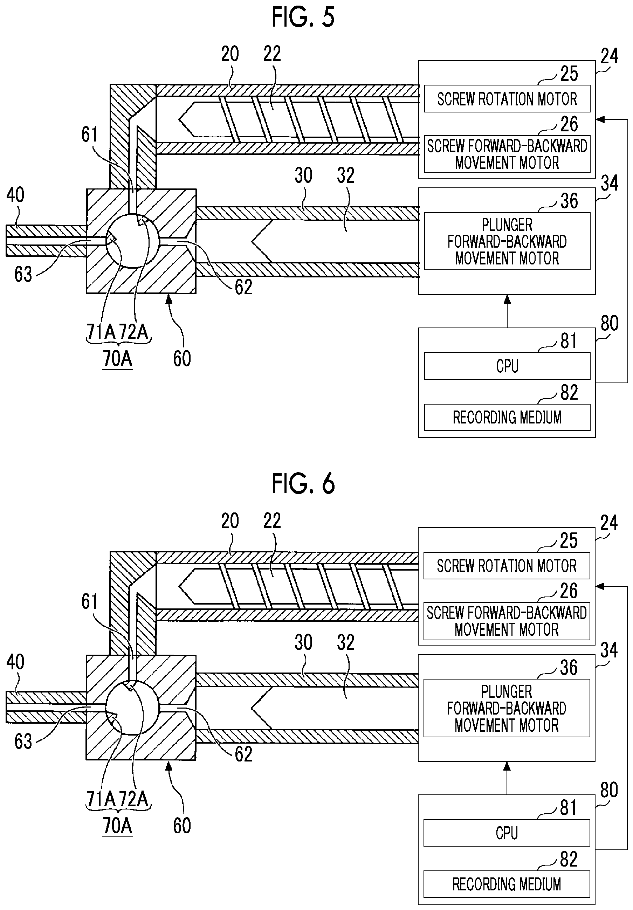

In addition, the rotation angle of the valve body 70 required for switching the state to the first state and the second state is not limited to 45°, and may be 45° or more or may be less than 45°. The rotation angle of the valve body 70 is not limited as long as the rotation angle of the valve body 70 required for switching the state to the first state and the second state can be decreased. For example, in a case where a first plug portion 71A and a second plug portion 72A shown in Figs. 5 and 6 are used, the rotation angle of the valve body 70A required for switching the state to the first state and the second state is less than 45°.

In addition, the valve body 70 of the present embodiment includes the first partition portion 75 between the first plug portion 71 and the second plug portion 72, and the first partition portion 75 partitions the inlet 73a of the first flow path 73 and the outlet 74b of the second flow path 74. Accordingly, it is possible to decrease stagnation of the flow of the molding material.

Moreover, the valve body 70 of the present embodiment includes the second partition portion 76 between the first plug portion 71 and the second plug portion 72, and the second partition portion 76 partitions the outlet 73b of the first flow path 73 and the inlet 74a of the second flow path 74. Accordingly, it is possible to decrease stagnation of the flow of the molding material.

Hereinbefore, the embodiment of the injection unit is described. However, the present invention is not limited to the above-described embodiment. Various modifications and improvement may be applied to the present invention within the scope which does not depart from the scope of the present invention described in claims.

The screw cylinder 20 of the embodiment is parallel to the plunger cylinder 30. However, the screw cylinder 20 may be perpendicular to the plunger cylinder 30 or may be inclined to the plunger cylinder 30.

In the above-described embodiment, the plunger cylinder connection port 62, the screw cylinder connection port 61, and the nozzle connection port 63 are disposed at a pitch of 90° in this order around the rotation center line of the valve body 70. However, the present invention is not limited to this deposition. For example, the screw cylinder connection port 61 may be disposed to be close to one of the plunger cylinder connection port 62 and the nozzle connection port 63 and to be away from the other thereof.

In the above-described embodiment, the screw cylinder 20 to which a solid molding material is supplied from the outside is used as the first cylinder. However, the plunger cylinder to which a liquid molding material is supplied from the outside may be used as the first cylinder. The plunger may be disposed inside the first cylinder to freely move forward and backward.

The direction changeover valve 50 of the above-described embodiment is used in the injection unit 10. However, the direction changeover valve 50 may be used in other devices (for example, a device which moves the injection unit or the like) included in an injection molding machine, or devices other than the injection molding machine. In the above-described embodiment, the screw cylinder 20, the plunger cylinder 30, and the nozzle 40 correspond to a first member, a second member, and a third member disclosed in claims.

## Claims

1. An injection unit (10), comprising:
a first cylinder (20);
a second cylinder (30);
a nozzle (40); and
a direction changeover valve (50) which switches a flow direction of a molding material between the first cylinder (20), the second cylinder (30), and the nozzle (40),
the direction changeover valve (50) includes a valve casing (60) and a valve body (70),
the valve casing (60) includes a first cylinder connection port (61) which communicates with the inside of the first cylinder (20), a second cylinder connection port (62) which communicates with the inside of the second cylinder (30), and a nozzle connection port (63) which communicates with the inside of the nozzle (40),
wherein
the valve body (70) is rotatable inside the valve casing (60) and the direction changeover valve changes a flow path by the rotation of the valve body (70), **characterized in that** the valve body(70) includes a first plug portion (71) which blocks the nozzle connection port (63) and communicates the first cylinder connection port (61) and the second cylinder connection port (62) with each other and a second plug portion (72) which blocks the first cylinder connection port (61) and communicates the second cylinder connection port (62) and the nozzle connection port (63) with each other, the first plug portion (71) and the second plug portion (72) have a gap therebetween along an outer periphery of the valve body (70).

2. The injection unit (10) according to claim 1,
wherein the valve body (70) includes a flow path through which the molding material flows between the first plug portion (71) and the second plug portion (72).

3. The injection unit (10) according to claim 1 or 2,
wherein the valve body (70) includes a first flow path which communicates with the first cylinder connection port (61) and the second cylinder connection port (62), and a second flow path which communicates with the second cylinder connection port (62) and the nozzle connection port (63) between the first plug portion (71) and the second plug portion (72).

4. The injection unit (10) according to claim 3,
wherein the valve body (70) includes a partition portion (75) which partitions an inlet of the first flow path and an outlet of the second flow path between the first plug portion (71) and the second plug portion (72).

5. The injection unit (10) according to claim 3 or 4,
wherein the valve body (70) includes a partition portion (75) which partitions an outlet of the first flow path and an inlet of the second flow path between the first plug portion (71) and the second plug portion (72).

## Patentansprüche

1. Einspritzeinheit (10), die Folgendes umfasst:
einen ersten Zylinder (20),
einen zweiten Zylinder (30),
eine Düse (40) und
ein Richtungsumschaltventil (50), das eine Strömungsrichtung einer Formmasse zwischen dem ersten Zylinder (20), dem zweiten Zylinder (30) und der Düse (40) umschaltet,
wobei das Richtungsumschaltventil (50) ein Ventilgehäuse (60) und einen Ventilkörper (70) umfasst,
wobei das Ventilgehäuse (60) einen ersten Zylinderverbindungsanschluss (61), der mit der Innenseite des ersten Zylinders (20) in Verbindung steht, einen zweiten Zylinderverbindungsanschluss (62), der mit der Innenseite des zweiten Zylinders (30) in Verbindung steht, und einen Düsenverbindungsanschluss (63), der mit der Innenseite der Düse (40) in Verbindung steht, umfasst,
wobei
der Ventilkörper (70) innerhalb des Ventilgehäuses (60) drehbar ist und das Richtungsumschaltventil einen Strömungsweg durch die Drehung des Ventilkörpers (70) ändert, **dadurch gekennzeichnet, dass** der Ventilkörper (70) einen ersten Stopfenabschnitt (71), der den Düsenverbindungsanschluss (63) sperrt und den ersten Zylinderverbindungsanschluss (61) und den zweiten Zylinderverbindungsanschluss (62) miteinander in Verbindung setzt, und einen zweiten Stopfenabschnitt (72), der den ersten Zylinderverbindungsanschluss (61) sperrt und den zweiten Zylinderverbindungsanschluss (62) und den Düsenverbindungsanschluss (63) miteinander in Verbindung setzt, umfasst, wobei der erste Stopfenabschnitt (71) und der zweite Stopfenabschnitt (72) einen Spalt zwischen denselben entlang eines Außenumfangs des Ventilkörpers (70) aufweisen.

2. Einspritzeinheit (10) nach Anspruch 1,
wobei der Ventilkörper (70) einen Strömungsweg umfasst, durch den die Formmasse zwischen dem ersten Stopfenabschnitt (71) und dem zweiten Stopfenabschnitt (72) strömt.

3. Einspritzeinheit (10) nach Anspruch 1 oder 2,
wobei der Ventilkörper (70) einen ersten Strömungsweg, der mit dem ersten Zylinderverbindungsanschluss (61) und dem zweiten Zylinderverbindungsanschluss (62) in Verbindung steht, und einen zweiten Strömungsweg, der mit dem zweiten Zylinderverbindungsanschluss (62) und dem Düsenverbindungsabschnitt (63) in Verbindung steht, zwischen dem ersten Stopfenabschnitt (71) und dem zweiten Stopfenabschnitt (72) umfasst.

4. Einspritzeinheit (10) nach Anspruch 3,
wobei der Ventilkörper (70) einen Unterteilungsabschnitt (75) umfasst, der einen Einlass des ersten Strömungsweges und einen Auslass des zweiten Strömungsweges zwischen dem ersten Stopfenabschnitt (71) und dem zweiten Stopfenabschnitt (72) unterteilt.

5. Einspritzeinheit (10) nach Anspruch 3 oder 4,
wobei der Ventilkörper (70) einen Unterteilungsabschnitt (75) umfasst, der einen Auslass des ersten Strömungsweges und einen Einlass des zweiten Strömungsweges zwischen dem ersten Stopfenabschnitt (71) und dem zweiten Stopfenabschnitt (72) unterteilt.

## Revendications

1. Unité d'injection (10) comprenant :
un premier cylindre (20) ;
un second cylindre (30) ;
une buse (40) ; et
une valve de changement de direction (50) qui commute une direction d'écoulement d'un matériau de moulage entre le premier cylindre (20), le second cylindre (30) et la buse (40),
la valve de changement de direction (50) comprend un boîtier de valve (60) et un corps de valve (70),
le boîtier de valve (60) comprend un premier orifice de raccordement de cylindre (61) qui communique avec l'intérieur du premier cylindre (20), un second orifice de raccordement de cylindre (62) qui communique avec l'intérieur du second cylindre (30), et un orifice de raccordement de buse (63) qui communique avec l'intérieur de la buse (40), dans laquelle :
le corps de valve (70) peut tourner à l'intérieur du boîtier de valve (60) et la valve de changement de direction change une direction d'écoulement par la rotation du corps de valve (70), **caractérisée en ce que** le corps de valve (70) comprend une première partie de bouchon (71) qui bloque l'orifice de raccordement de buse (63) et fait communiquer le premier orifice de raccordement de cylindre (61) et le second orifice de raccordement de cylindre (62) entre eux et une second partie de bouchon (72) bloque le premier orifice de raccordement de cylindre (61) et fait communiquer le second orifice de raccordement de cylindre (62) et l'orifice de raccordement de buse (63) entre eux, la première partie de bouchon (71) et la seconde partie de bouchon (72) ont un espace entre elles le long d'une périphérie externe du corps de valve (70).

2. Unité d'injection (10) selon la revendication 1,
dans laquelle le corps de valve (70) comprend une trajectoire d'écoulement à travers laquelle le matériau de moulage s'écoule entre la première partie de bouchon (71) et la seconde partie de bouchon (72).

3. Unité d'injection (10) selon la revendication 1 ou 2,
dans laquelle le corps de valve (70) comprend une première trajectoire d'écoulement qui communique avec le premier orifice de raccordement de cylindre (61) et le second orifice de raccordement de cylindre (62), et une seconde trajectoire d'écoulement qui communique avec le second orifice de raccordement de cylindre (62) et l'orifice de raccordement de buse (63) entre la première partie de bouchon (71) et la seconde partie de bouchon (72).

4. Unité d'injection (10) selon la revendication 3,
dans laquelle le corps de valve (70) comprend une partie de séparation (75) qui sépare une entrée de la première trajectoire d'écoulement et une sortie de la seconde trajectoire entre la première partie de bouchon (71) et la seconde partie de bouchon (72).

5. Unité d'injection (10) selon la revendication 3 ou 4,
dans laquelle le corps de valve (70) comprend une partie de séparation (75) qui sépare une sortie de la première trajectoire d'écoulement et une entrée de la seconde trajectoire d'écoulement entre la première partie de bouchon (71) et la seconde partie de bouchon (72).
